Europäisches Patentamt

European Patent Office

Office européen des brevets

(19)

(11) Publication number: **0 089 446**

**A1**

(12)

# EUROPEAN PATENT APPLICATION

(21) Application number: **82830065.7**

(22) Date of filing: **22.03.82**

(51) Int. Cl.³: **B 01 D 35/14**
**F 15 B 21/04**

(43) Date of publication of application:
28.09.83 Bulletin 83/39

(84) Designated Contracting States:
AT BE CH DE FR GB IT LI LU NL SE

(71) Applicant: Ditta HIDROBEN Spa
Via G. di Vittorio 6
Casalfiumanese Bologna(IT)

(72) Inventor: Pirani, Piero
Via C.Cattaneo 6
Ferrara(IT)

(74) Representative: Sassatelli, Franco
c/o INIP Ufficio Internazionale Brevetti per Deposito di
Brevetti e Marchi via Mazzini, 170
I-40139 Bologna(IT)

(54) Cover with valves of flux counterpressure and regulation for hydraulic circuits in general.

(57) The principal feature of this filter bearing block (1) is to enclose in the envelope the counterpressure valve (6) and the flux regulating one (7). Its functions are essentially as follows: to maintain a given pressure in a branch (4) of the hydraulic installation by means of the counterpressure valve (6), to convey a given quantity of oil to the filter, in line with the heat exchanger, and to unload the exceeding one through the flux regulation valve (7) directly to the drain. The invented device permits a simplification in the present contrivances for hydraulic circuits in general which foresee the separate employ on distinct parts of counterpressure and flux regulation valves.

FIG.1

EP 0 089 446 A1

- 1 -

Cover with valves of flux counterpressure and regulation for hydraulic circui
ts in general.

The invention refers to a filter bearing cover which substantially encloses
the counterpressure valve and the one for the flux regulation. In the instal
lations of the present hydraulic circuits in general, the counterpressure and
flux regulation valves are foreseen on separate parts in  line before
the heat exchanger. The invented device permits a simplification in the hydra
ulic installations by grouping the filter and the two counterpressure and flux
regulating valves into only one operating block.

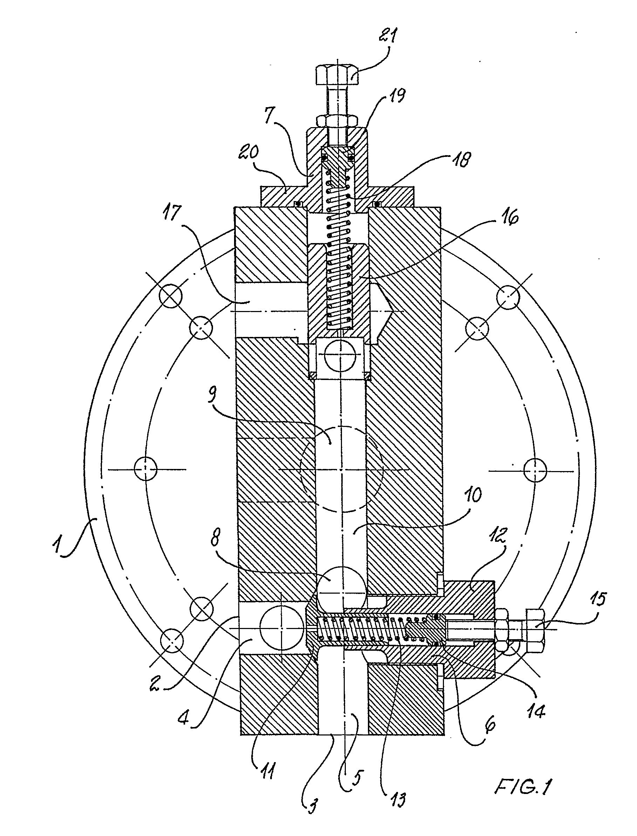

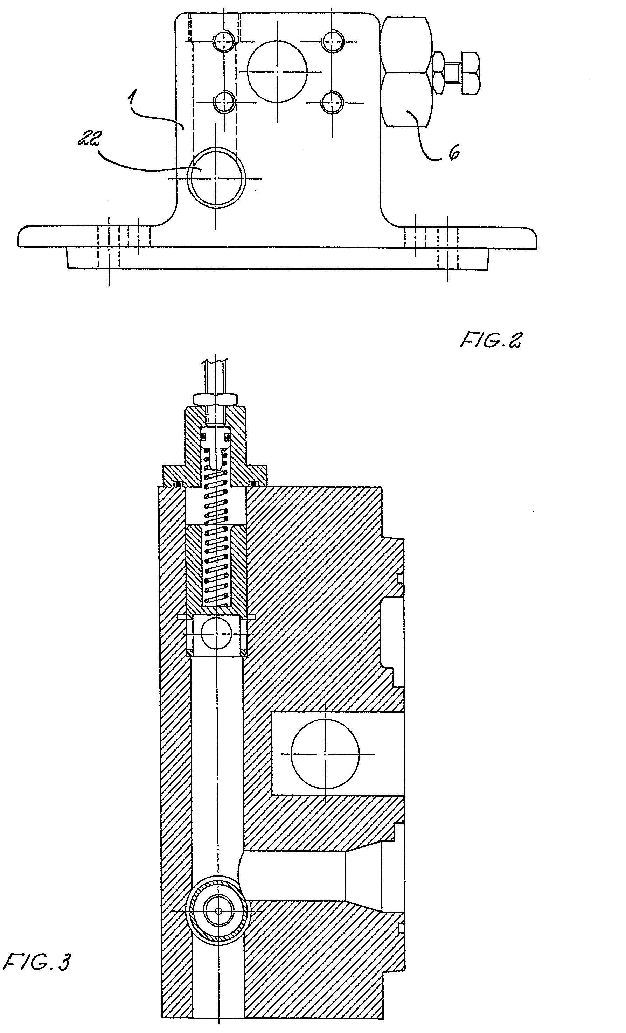

An explicating execution version is illustrated in the drawings of Tables 1
and 2, where fig. 1 is the transversal section of the filter carrying cover
showing the two valves and the relevant connections. Fig. 2 is the side view
of the filter cover showing the counterpressure valve. Fig. 3 is the longitu
dinal section of the cover showing the flux regulation valve. This filter be
aring block has the following functions: to maintain a given pressure in one
branch of the hydraulic installation by means of the counterpressure valve,
to convey a certain quantity of oil to the filter in line with the heat exchanger and to discharge the exceeding quantity through the flux regulating
valve directly  into the drain.

The version foresees the filter bearing block 1 with inlet openings 2 and
3 which lead to the communicating ducts 4 and 5 having orthogonal scheme. On
the inlet opening of duct 4 in duct 5, counterpressure valve 6 is fitted for
closing and is foreseen to be adjustable and with the task to maintain a cer
tain pressure in duct 4. In correspondence of inlet 3 of duct 5, in channel
10 the closing and flux regulating valve 7 is foreseen to be calibrated and having the function of bypassing the exceeding fluid not conveyed into the filter, by sending in directly to the tank.

The oil, on the contrary, which is conveyed into the filter through passage 8 foreseen for this purpose, is then delivered through passage 9 into suitable heat exchanger which cools it and sends it to the drain. The oil coming from inlet 3 by-passes valve 6 and is led into duct 10. The oil coming from inlet 2 cannot reach duct 10 as this one is obstructed by small piston 11 of the adjustable valve 6. The said piston 11 fitted in valve 12 is opposing to the passage of the fluid through spring 13 guided by pusher 14 adjusted by srew 15. This regulation allows to keep the wished pressure in duct 4. The fluid coming from duct 4 is added to the one coming from 5 into channel 10.

Part of this delivery goes to the filter through bore 8 and is then filtered and gets out from bore 9 and is conveyed into the heat exchanger to be cooled and subsequently drained. The exceeding fluid, i.e. the part which is not received by the filter, displaces the small piston 16 of the flux regulating valve 7 and is directly put into drain duct 17. Piston 16 counterposes the oil passage by means of spring 18 reaction, supported by guide 19 fitted on part 20 with regulation allowed by screw 21. This regulation permits to send the quantity of oil exceeding the capacity to the drain and, therefore, to regulate the oil quantity which is deemed advisable to deliver to the heat exchanger.

In part 1, a tap 22 is foreseen before the counterpressure valve for feeding other uses if required by the circuit.

In particular, the form of the filter block, the adjustment devices, the ducts and construction forms may be foreseen otherwise.

<u>Claims.</u>                              - 1 -

1) Filter carrying cover with counterpressure and flux regulating valves for hydraulic circuit in general, characterized by the fact that the filter carrying cover includes the counterpressure and flux regulation valves in the envelope. The said block functions are: to keep a given pressure in one branch of the hydraulic installation through the counterpressure valve, to convey a certain quantity of oil to the filter in line with the heat exchanger, and to discharge the exceeding quantity directly to the drain through the flux regulating valve.

2) Filter carrying cover with counterpressure and flux regulating valves for hydraulic circuit in general, according to the previous claim, characterized by the fact that the version foresees the filter bearing block 1 with inlet openings 2 and 3 which lead to the communicating ducts 4 and 5 having orthogonal scheme. On the inlet opening of duct 4 in duct 5, counterpressure valve 6 is fitted for closing and is foreseen to be adjustable and with the task to maintain a certain pressure in duct 4. In correspondence of inlet 3 of duct 5, in channel 10 the closing and flux regulating valve 7 is foreseen to be calibrated and having the function of by-passing the exceeding fluid not conveyed into the filter by sendingit directly to the tank. The oil, on the contrary, which is conveyed into the filter through passage 8 foreseen for this purpose, is then delivered through passage 9 into a suitable heat exchanger which cools it and sends it to the drain. The oil coming from inlet 3 by-passes valve 6 and is led into duct 10. The oil coming from inlet 2 cannot reach duct 10 as this one is obstructed by small piston 11 of the adjustable valve 6. The said piston 11 fitted in valve 12 is opposing to the passage of the fluid through spring 13 guided by pusher 14 adjusted by screw15. This regulation allows to keep the wished pressure in duct 4. The fluid coming from duct 4 is added to the one coming from 5 into channel 10. Part of this delivery goes to the filter through bore 8 and is then filtered and gets out from bore 9 and is conveyed into the heat exchanger to be cooled and subsequently drained. The exceeding fluid, i.e. the part which is not received by the filter, displaces the small piston 16 of the flux regulating valve 7 and is directly put into drain duct 17. Piston 16 counterposes the oil passage by means of allowed by screw 21. This regulation permits to send the quantity of oil exceedin̄g capacity to the drain and, therefore, to regulate the oil quantity which is deemec̄ visable to deliver to the heat exchanger.

3) Filter carryin cover with counterpressure and flux regulating valves for hydrat̄ circuit in general, according to the previuos claims, characterized by the fact t̄ in part 1, a tap 22 is foreseen before the counterpressure valve for feeding othēr if required by the circuit.

FIG.1

FIG.2

FIG.3

## DOCUMENTS CONSIDERED TO BE RELEVANT

EP 82830065.7

| Category | Citation of document with indication, where appropriate, of relevant passages | Relevant to claim | CLASSIFICATION OF THE APPLICATION (Int. Cl. ³) |
|---|---|---|---|
| X | CH - A - 269 171 (FORD)<br>* Totality * | 1 | B 01 D 35/14<br>F 15 B 21/04 |
| X | GB - A - 724 726 (PUROLATOR)<br>* Totality * | 1 | |
| A | GB - A - 1 380 334 (SPRAYING)<br>* Fig. 3 * | 2 | |
| A | GB - A - 1 389 020 (GIRLING) | 2 | |
| A | GB - A - 1 591 542 (SHOKETSU)<br>* Fig. 1 * | 2 | |

TECHNICAL FIELDS
SEARCHED (Int. Cl. ³)

| Category | Citation | Relevant | TECHNICAL FIELDS |
|---|---|---|---|
| A | GB - A - 1 601 998 (MASSEY) | | B 01 D 35/00 |
| A | US - A - 3 605 793 (KINSEL) | | B 01 D 27/00 |
| | | | F 15 B 20/00 |
| | | | F 15 B 21/00 |
| | | | F 16 K 17/00 |

The present search report has been drawn up for all claims

| Place of search | Date of completion of the search | Examiner |
|---|---|---|
| VIENNA | 18-11-1982 | BAUMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
  & : member of the same patent family, corresponding document

EPO Form 1503. 03.82